(19) **Europäisches Patentamt / European Patent Office / Office européen des brevets**

(11) **EP 1 492 361 B1**

(12) # EUROPEAN PATENT SPECIFICATION

(45) Date of publication and mention
of the grant of the patent:
**14.05.2014 Bulletin 2014/20**

(51) Int Cl.:
***H04W 36/24*** *(2009.01)*

(21) Application number: **04022799.3**

(22) Date of filing: **12.11.1999**

(54) **Method and device for preventing toggling between two zones of a wireless communication network**

Verfahren und Gerät zur Verhinderung des Hin- und Herwechselns zwischen zwei Zonen eines drahtlosen Kommunikationsnetzes

Procédé et dispositif permettant d'éviter le basculement entre deux zones d'un réseau de communication sans fil

(84) Designated Contracting States:
**DE FR GB IT SE**

(30) Priority: **12.11.1998 US 108112 P**
**30.11.1998 US 110469 P**

(43) Date of publication of application:
**29.12.2004 Bulletin 2004/53**

(62) Document number(s) of the earlier application(s) in accordance with Art. 76 EPC:
**99961679.0 / 1 118 232**

(73) Proprietor: **FUJITSU LIMITED**
**Kawasaki-shi,**
**Kanagawa 211-8588 (JP)**

(72) Inventor: **Plunkett, Robert T.**
**Richardson**
**Texas 75082 (US)**

(74) Representative: **HOFFMANN EITLE**
**Patent- und Rechtsanwälte**
**Arabellastrasse 4**
**81925 München (DE)**

(56) References cited:
**EP-A- 0 439 628      WO-A-94/16529**
**WO-A-95/28063      WO-A-97/33448**
**US-A- 5 732 350      US-A- 5 802 468**

**Description**

1. Field of the Invention

The present invention relates in general to a wireless communications network that offers different services in different zones thereof. More specifically, the present invention relates to preventing toggling between the different zones of the wireless communications network.

2. Description of the Related Art

US-A-5,802,468 describes a system and method for providing different levels of mobile communication service for a mobile station within a communication system service area. A plurality of base transceiver stations (BTSs) are coupled to a common database. Each BTS has a cellular service area for communicating with the mobile station, a unique identification, and is located with respect to other base transceiver stations for defining a plurality of overlapping cellular service areas which collectively define the service area of the communication system. The common database has a memory for storing data related to a home geographical location associated with the mobile station, and the identity of the BTSs having service areas overlapping the home geographical location. The geometric shapes of the service areas overlapping the home geographical location of the mobile station define a home calling area. A first level of service is provided to the mobile station when the mobile station is inside the home calling area, and a second level of service when the mobile station is outside of the home calling area. The second level of service may be defined by the identities of additional BTSs for providing a third level of service beyond the service areas of these additional BTSs.

WO 95/28063 describes a method and arrangement for location management in connection with packet data transmission. The mobile communication system comprises dedicated location management and location updating for mobile stations using a packet service in addition to the normal location management and location area configuration.

WO 97/33448 describes a TDMA or CDMA cellular telephone network including a plurality of registration areas. In instances of mobile station cell reselection between a cell located in a first registration area and a cell located in a second registration area, the mobile station processes control or pilot channel signal strength measurements in view of both a conventional reselection hysteresis and an additional registration hysteresis.

WO 94/16529 describes a method of reducing control channel traffic in a radio communication system which employs a scheme that defines paging areas. A paging area comprises at least a first location area and other coverage areas. Radio communication is provided that exhibits a degree of cochannel interference among control channels serving coverage areas that are associated with different location areas.

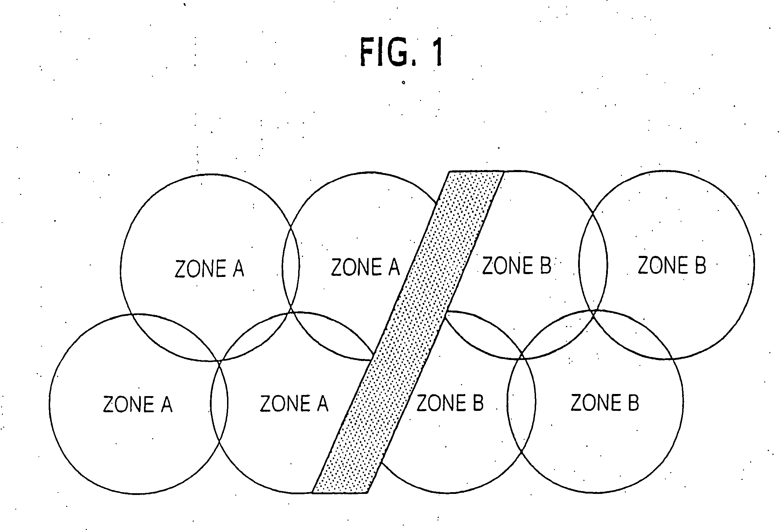

Fig. 1 is a schematic view of a conventional wireless communications network. The network shown in Fig. 1 has zone A and zone B. Each of the circles in Fig. 1 represents a cell. A zone can be made up of one or more cells. The zones are differentiated based on the services offered. For example, zone A may be a home zone to users residing therein. Within the home zone, the user may be given a more favorable calling rate or the user may be given more features in the home zone. The system shown in Fig. 1 may be implemented in a single network having different tiers of services. The planned Tiered Services in CDMA 2000 networks is one example of different tiers of services.

When the user travels between the cells shown in Fig. 1, the mobile unit must change the cell with which it is communicating. This is done in a "hand-off." The mobile unit is designed to operate on the cell having the strongest signal. In the overlapping areas in Fig. 1, communication is available on more than one cell. Changing signal strength in the overlapping areas can result in multiple hand-offs between cells at the boundary thereof. Signal strength changes occur due to movement of the mobile unit itself and due to movement of objects between the mobile unit and the associated cell sites. Multiple hand-offs are generally not a matter that concerns the user.

The shaded portion of Fig. 1, where zone A overlaps zone B, represents an area where communication is available on either zone A cells or zone B cells. If multiple hand-offs cause the mobile unit to toggle back and forth between cells of different zones, the user's service is changing, and this creates problems for the user. For example, in the process of dialing a phone number to be called, at the beginning of the dialing sequence, the user may be within zone A. At this point, the user may be entitled to a free call and may not be required to dial the complete phone number, including area code. However, after the user inputs the full dialing sequence, the mobile unit may have switched to zone B. Not only will the user be forced to pay a higher rate, but the user's call may not go through because the user did not dial the complete phone number, including area code.

Accordingly, it is an object of the present invention to prevent a mobile unit from toggling back and forth between different zones of a wireless communications network.

According to a first aspect of the invention, there is provided a method for preventing toggling in a wireless network having a plurality of cells including a first cell, a second cell adjacent to the first cell, and a third cell, the first cell offering services of at least a first zone, the second cell offering services of both the first zone and a second zone, the services of the first zone being different from the services of the second zone, each of the first and second zones having boundaries defined by at least one cell boundary, comprising the steps of:

preventing, after a mobile unit hands off to the second cell from the first cell, the mobile unit from using services of the second zone unless the mobile unit was using services of the second zone in the first cell, before entering the second cell,
wherein a hysteresis parameter prevents the mobile unit from using services of the second zone in the second cell, and
permitting the mobile unit to use the services of the second zone in the third cell if the mobile unit was not using services of the second zone before entering the third cell and if there is no hysteresis parameter associated with the second zone in the third cell.

According to a second aspect of the invention, there is provided a wireless network for preventing a mobile unit from toggling between services of first and second zones, comprising:

a first cell; and
a second cell having hysteresis and offering services of first and second zones, each of the first and second zones having boundaries defined by at least one cell boundary, to prevent a said mobile unit travelling from the first cell to the second cell from using services of the second zone, after the said mobile unit hands off to the second cell from the first cell, unless the said mobile unit was using services of the second zone before entering the second cell,
wherein a hysteresis parameter is arranged to prevent the mobile unit from using services of the second zone in the second cell,
the network having a third cell, the mobile unit being permitted to use the services of the second zone in the third cell if the mobile unit was not using services of the second zone before entering the third cell and if there is no hysteresis parameter associated with the second zone in the third cell.

The invention will be readily understood by reference to the following description of preferred embodiments described by way of example only, with reference to the accompanying drawings in which like reference characters represent like elements, wherein:

Fig. 1 is a schematic view of a conventional wireless communications network having a plurality of zones;
Fig. 2 is a schematic view of a first wireless communications network according to a preferred embodiment of the present invention;
Fig. 3 is a schematic view of a second wireless communications network according to the preferred embodiment of the present invention; and
Fig. 4 is a schematic view of a wireless communications network according to a second example.

The following describes a method and device for preventing toggling between two zones of a wireless communications network. 'The method and device employ first and second adjacent cells respectively offering services of first and second different zones. The mobile unit determines if the second zone is more preferable than the first zone when the mobile unit hands off from the first cell to the second cell. If the second zone is less preferable than the first zone, the mobile unit does not switch to the second zone within the second cell. If the second zone is more preferable, the first zone is maintained within the second cell until the signal strength of the second cell exceeds the signal strength of the first cell by an amount determined by an exit parameter. At this point, the mobile unit switches to the services of the second zone.

Alternatively, after the mobile unit enters the second cell from the first cell, the mobile unit may be prevented from using services of the second zone by providing a hysteresis parameter associated with the second zone in the second cell where the mobile unit was not using services of the second zone in the first cell, before entering the second cell. Even if there is a hysteresis parameter associated with the second zone in the second cell, the mobile unit may be permitted to power up in the second cell on the second zone.

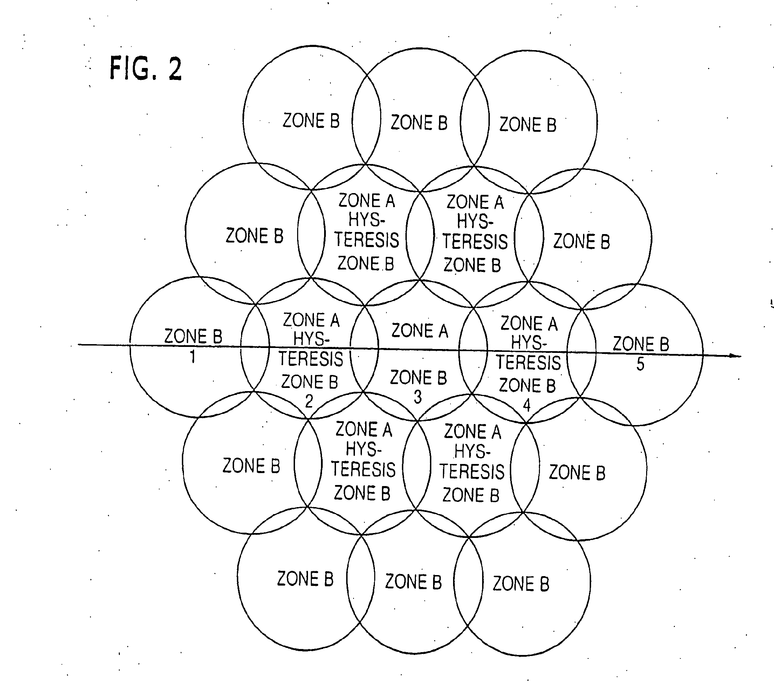

Fig. 2 is a schematic view of a wireless network according to a preferred embodiment of the present invention. Like Fig. 1, each of the circles represents a cell. Within each cell user zone IDs identify the zones available. When a mobile unit changes cells, the user zone IDs of the new cell are transmitted to and received by the mobile unit. In the Fig. 2 network, user zone IDs inform the mobile unit that zone A and/or zone B is available. All cells support the services of zone B. In addition to zone B, the center seven cells also support the services of zone A. The six outer cells that support zone A are designated as hysteresis cells for zone A. Depending upon internal preferences programmed within it, the mobile unit prefers to access one zone over another zone. In our example, the mobile unit prefers to access the services of zone A.

The mobile unit will use zone B, the only available zone, in cell 1. In moving from the outer cells of the diagram to the inner cells, the mobile unit will continue to use zone B services in cell 2. This is because the cells surrounding the inner most cell are designated as hysteresis cells for zone A. The mobile unit will not seek the services associated with zone A until it has reached the inner most cell (cell 3), the zone A cell without hysteresis. This same mobile unit, in moving from the inner most cell (cell 3) to the outer cells (cells 4 and 5) will continue using zone A in cell 4. This is because the mobile unit prefers to access zone A. The mobile will not switch to zone B services until it has reached cell 5, which supports only zone B services.

The effect of the hysteresis parameter is to create a gap between when the mobile unit can obtain the services of zone A and when the mobile unit can drop the services of zone A. This gap prevents the toggling between zone A and zone B that would normally result if the entry and exit points for zone A were at the same cell boundary and the mobile was in the proximity of the boundary.

It is important to understand that the hysteresis parameter does not alter the timing of handoffs between cells. The mobile unit will switch from one cell to an adjacent cell when the signal strength of the new cell exceeds the signal strength of the old cell. It is also important to understand that the hysteresis parameter can eliminate toggling by altering only the entrance point into a new zone. In our example, the mobile unit exits zone A as it would without any hysteresis parameter. That is, the mobile unit prefers zone A over zone B, and therefore, the mobile unit continues to access zone A until it is no longer available (at the normal handoff point to one of the outer cells supporting only zone B services).

A hysteresis parameter is associated with only one zone. In the Fig. 2 example, the six intermediate cells are zone A hysteresis cells and have the zone A hysteresis parameter set. If there were three zones (perhaps zones A, B and C) available in the Fig. 2 example, the presence of the zone A hysteresis parameter in the intermediate cells would have no effect on the change of zones between zones B and C. Separate hysteresis parameters for zones B and C would be required to achieve this objective.

With regard to how the hysteresis parameter is implemented, it may be transmitted to the mobile unit by the cells. As mentioned previously, the network transmitters within the cells transmit user zone IDs identifying the zones available in that cell. The hysteresis parameter may be appended to the user zone ID. In this case, the user zone ID informs the mobile unit that a zone is available in the cell and informs the mobile unit that it cannot access the zone unless it was previously using the zone.

As an alternative to having the user zone IDs and/or hysteresis parameters transmitted to the mobile unit, the mobile unit may use other identification parameters broadcast by the cell site to identify what user zone it is in and the state of the hysteresis parameter. Cell sites typically broadcast system IDs, network IDs, basestation IDs and basestation position (latitude and longitude). By using a cross reference table stored in mobile unit memory, between these identification parameters and the user zone IDs and hysteresis parameters, the mobile unit may use any or all of these identification parameters to identify the corresponding user zone(s) and hysteresis parameter(s) for a given cell. As in the earlier example, the mobile unit would then use internally stored preferences to select the appropriate user zone.

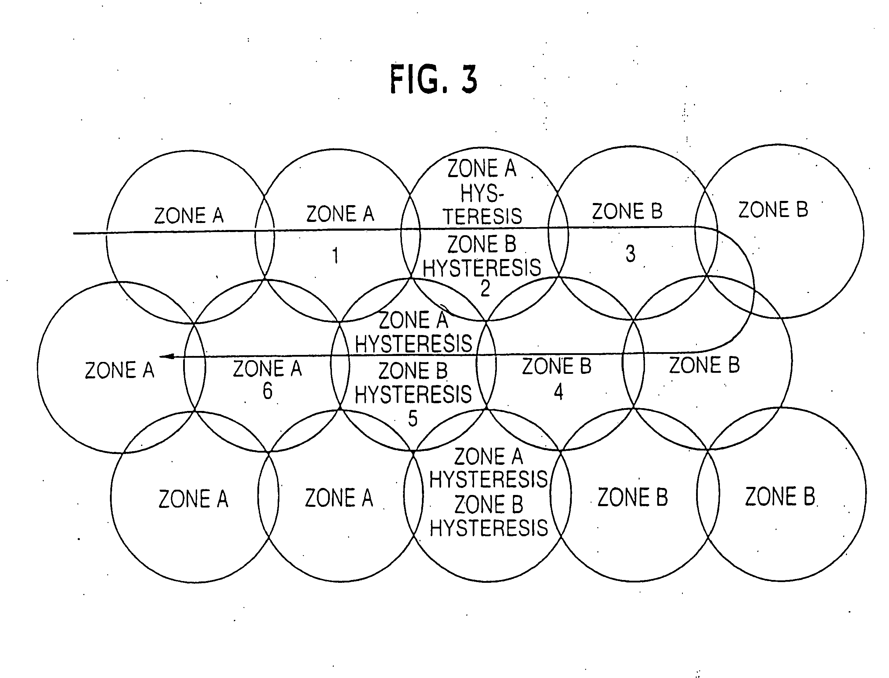

The Fig. 2 example demonstrates how the mobile unit selects the zone of operation when entering a hysteresis zone cell from another cell. The user continues to access the previous zone. Fig. 3 illustrates an example where the overlap of zones is minimal. This case would be typical of a zone dialing application where the user needs to know what zone the mobile unit is in before dialing a number but otherwise has no preference for any particular zone. In Fig. 3, the center three cells offer services of both zone A and zone B. A mobile unit moving from west to east (left to right in Fig. 3) would first use the services offered by zone A (see area 1) and would continue to use zone A until reaching the boundary between areas 2 and 3. At this point, the mobile unit would switch to the services offered by zone B. Reversing direction, the mobile unit would continue to access the services of zone B until reaching the boundary between area 5 and area 6 where it would revert back to using the services of zone A.

It is of course possible that the user could power up the mobile unit within a cell having the hysteresis parameter set for the preferred zone. This could happen in areas 2 and 4 of Fig. 2 and areas 2 and 5 of Fig. 3. In Fig. 2 the unavailability of zone A (the preferred zone) would not be a problem since zone B (the less preferred zone) is available. In areas 2 and 4 of Fig. 2, the mobile unit could power up using the services of zone B. In areas 2 and 5 of Fig. 3, however, the hysteresis parameter is set for all available zones. The mobile unit would normally be blocked from accessing both zone A and zone B. To avoid such a problem, an additional parameter ("the power up parameter") is provided to permit the mobile unit to power up using the services of a zone that would otherwise be prohibited. Upon powering up in a cell, the mobile unit is prohibited from accessing a zone only if the hysteresis parameter is set for that zone and the power up parameter is not set.

Like the hysteresis parameter, the power up parameter may be broadcast by the cell or may be stored within the mobile unit and obtained by matching. To accommodate the power up parameter, the hysteresis parameter could be transmitted as two bits of information. The first bit could inform the mobile unit as to whether hysteresis is on. The second bit could inform the mobile unit as to whether it is permitted to access the associated zone after powering up in the cell.

There may be circumstances where a mobile unit, at power up, can access several zones. There are various way to accommodate this situation. The mobile unit might prefer zones for which the hysteresis parameter is not set. In this case, the mobile unit uses a zone having hysteresis and the power up parameter only if all zones have the hysteresis parameter set.

The preferred embodiment prevents toggling between different user zones. In the simplest implementation, toggling is eliminated by associating a hysteresis parameter with selected cells of a user zone. The result is that the entry point for a user zone is well inside the exit point for that user zone. These hysteresis cells would typically surround a user zone. Of course, all cells having a hysteresis parameter set for a zone must support the services of that zone. In the network shown in Fig. 1, none of the cells support both zone A and zone B. Accordingly, to implement the present invention in the network shown in Fig. 1 appears to require that one or more of the cells be reconfigured to support both zone A and zone B. However, the base stations respectively defining different cells are connected to a common switching system. The wireless carrier controlling the cells may prefer not to support the services of a particular zone in its cells and normally may not offer the services of that particular zone. However, the wireless carrier is capable of supporting these services in all cells. For the purpose of preventing toggling, the wirleess carrier will make the services of a particular zone available, even if those services are not normally offered.

The above description is based on the concept of cells being the smallest element for definition of a user zone: In cellular systems, cells may be further sub-divided into what are known as sectors. For purposes of user zones, a sector may also be considered a cell in that it may be uniquely assigned one or more user zones, hysteresis parameters and power up parameters.

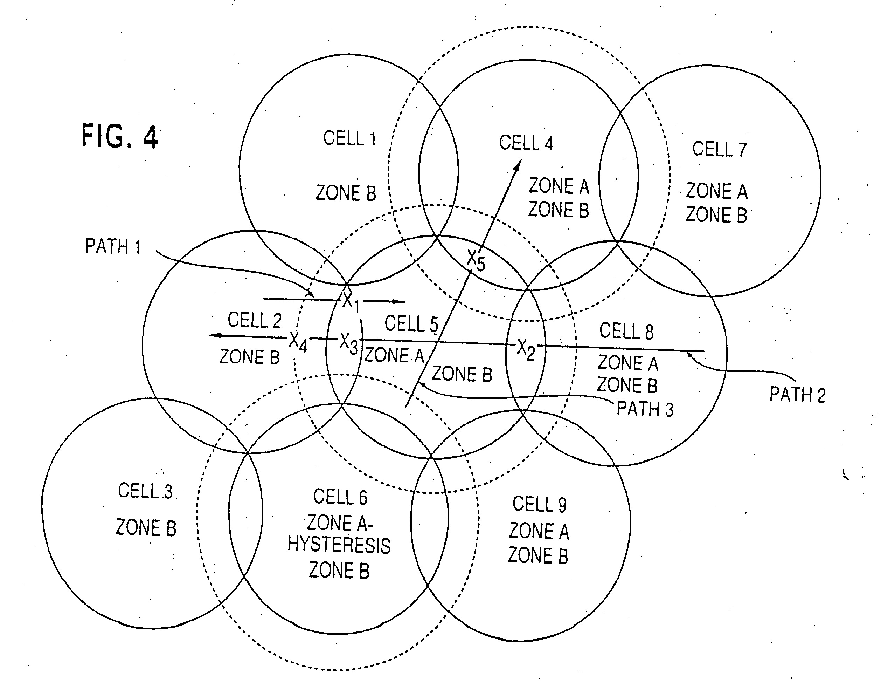

Fig. 4 is a schematic view of a wireless network having a plurality of zones according to a second example. The second example is similar to the preferred embodiment, and only the differences will be described. According to the second example a new parameter, referred to as the "User Zone Exit Parameter (UZXP)," is defined. Every zone within a cell has a UZXP associated therewith. When the mobile unit performs a handoff from an old cell to a new cell, the mobile unit receives or internally identifies a list of internally user zones available within the new cell. For example, the mobile unit may receive the user zone IDs of each available zone. At this point, the mobile unit refers to a list of zone preferences stored therein. If the zone currently accessed is available in the new cell and is more preferable than any other zone available in the new cell, the mobile unit will continue to operate on that zone. On the other hand, if the mobile unit determines that one of the zones being offered by the new cell is more preferable than the zone currently being used, the mobile unit would like to switch to the new zone. Before the mobile unit can exit the old zone, the following equation must be satisfied:

$$\frac{PQ_o}{PQ_n} < UZXP_o$$

where:

PQ is a measure of the pilot quality for a cell (one implementation would use the parameter Ec/Io as the value for PQ). $PQ_n$ represents the pilot quality of the new cell. $PQ_o$ represents the pilot quality of the old cell.

$UZXP_o$ is the user zone exit parameter of the zone currently being used, for the old cell. UZXP is typically a unitless fraction. If the equation ($PQ_n$ - $PQ_o$) > $UZXP_o$ is used, UZXP would be positive number in dB.

The effect of UZXP is to delay the exit from a zone until past the normal idle mode handoff point. As with the first embodiment, the handoff point remains unchanged. At the time of handoff, the mobile unit learns the zones available in the new cell. If the old zone is available in the new cell, and if the old zone is more preferable than any other zone available in the new cell, the mobile unit does not evaluate the UZXP equation and continues operation on the old zone. However, as soon as the mobile unit determines that a user zone change is unnecessary, the UZXP stored in the mobile unit is updated so that the UZXP corresponds with the zone (same zone) and the cell (new cell) being used. If there is no change in zones, the UZXP can be updated without delay.

If the new cell, however, does not support services associated with the user zone previously being used, those services will be offered to the mobile unit on a provisional basis. The mobile unit will evaluate the above UZXP equation as described above to determine the exit point where the mobile unit will switch to one of the zones normally supported by the cell. The cell will expect that the mobile unit will discontinue using the old zone as soon as the equation is satisfied.

If the new cell supports the old zone, but the old zone is less preferred than one of the other zones available in the new cell, the mobile unit would evaluate the UZXP equation, as mentioned above. Once the signal strength of the new cell exceeds the signal strength of the old cell by UZXP, the mobile unit switches zone. At that point, the mobile updates the UZXP stored therein. The UZXP of the new zone and new cell replaces the old UZXP. Note that before the mobile unit switches zones, it maintains the old UZXP. This is different from the situation where there is no zone change.

There are several ways to implement the UZXP. In the example described above, there is a UZXP for each zone within a cell. If the UZXP is set to zero, the transition from an old zone to a new zone occurs at the normal handoff point. As an alternative to this, perhaps only selected zones and cells would have a UZXP associated therewith. For example, only the border cells of a zone would have a UZXP. Within a given zone, if a cell did not have a UZXP, the transition out of that zone would occur at the normal handoff point.

Unlike the preferred embodiment, no special provisions are required to allow the user to power up. The UZXP alters when mobile units exit a zone, but does not alter when mobile units enter a zone.

As with the hysteresis parameter, there are different ways the mobile unit can obtain the UZXP. The UZXP can be transmitted along with the corresponding user zone ID to the mobile unit by the cell. Alternatively, like the preferred embodiment, the mobile unit may use a cross reference table stored in mobile station memory, to identify user zone IDs and UZXPs associated with cell identification parameters such as system IDs, network IDs, basestation IDs and basestation position (latitude and longitude). Further, it is possible that both the transmission method and the cross reference table method would be used in a single network.

It should be noted that each cell has three sectors, and there may be a UZXP for each sector. Regardless of the number of UZXPs, the method of obtaining the UZXP is generally the same.

The operation of a network employing the second example is illustrated in the Fig. 4. In this example cells 4, 5 and 6 all have non-zero values for UZXP. A typical value for UZXP could be +8 dB ( assuming that the equation evaluated is $PQ_n$-$PQ_o$ > UZXP). The outer dashed lines represent schematically the effect of the UZXP parameter. The following mobile station paths illustrate how the second example would work under various scenarios:

Path 1 - A mobile unit (with a preference for user zone A) following the short line from left to right, moves from cell 2 to cell 5. Cell 2 does not offer zone A and has a UZXP of zero for zone B. In travelling, the mobile unit begins communication with the new cell and the new user zone at the normal idle mode handoff point designated $X_1$. This occurs since cell 2 has a zero value for UZXP for zone B. Once past point $X_1$ the mobile unit begins receiving the services associated with zone A.

Path 2 - A mobile unit follows the longer line from right to left from cell 8 to cell 5, then to cell 2. Both cells 5 and 8 offer the preferred zone, zone A. As the mobile unit travels from cell 8 to cell 2, it performs normal idle mode handoff at point $X_2$ the equal power point between the two cells. Since both cell 8 and cell 5 support the preferred zone, there is no change in zone services. Cell 5 has a non-zero UZXP value for zone A. As the mobile moves through cell 5 and hits point $X_3$, normal idle mode handoff procedures would result in a handoff to cell 2. Since cell 2 does not support user zone A, the mobile station would begin to evaluate the UZXP equation for the pilot quality of cell 5 versus the pilot quality for cell 2. The value for UZXP used to evaluate the equation is of course the UZXP for zone A in cell 5. At point $X_4$ the value of $PQ_5/PQ_2$ drops below the value of $UZXP_{A, 5}$. The equation is now satisfied and the mobile station exits zone A and beginning to use zone B services.

Path 3 - Following the path from the lower left to the upper right of Fig. 4, the mobile unit moves from cell 5 to cell 4. Both cells 5 and 4 support zone A services. Further, both cells 5 and 4 have a non-zero value for the zone A UZXPs. Upon passing through point $X_5$, the equal power point between cell 5 and cell 4, the mobile unit performs idle mode handoff to cell 4. The control channels of cell 4 and decoded, and the mobile unit determines that zone A is supported on cell 4. Since cell 5 and cell 4 both support the preferred zone (zone A), there is no need to evaluate the UZXP equation. The mobile continues to use the services associated with zone A. However, should it be necessary to evaluate the UZXP equation when the mobile unit leaves cell 4 (for example, to go to cell 1), the UZXP for cell 4 will be used. That is, the mobile unit will update the UZXP stored therein.

The second example is described above as having a UZXP for each zone/cell combination. If the UZXP is not to alter a zone transition point, the value of UZXP is either 1 (if the ratio equation is used) or 0 (if the difference equation is used). Alternatively, if there is no need to alter the zone transition point, it is also possible that some of the zone/cell combinations would not have a UZXP. The mobile continues to use the services associated with zone A. However, should it be necessary to evaluate the UZXP.

The second example is described above as having a parameter that only alters when mobile units exit a zone. It is alternatively possible that the example could alter when mobile units enter a zone. Further, it is possible the that example could alter both when mobile units enter and exit a zone.

While the invention has been described in connection with the preferred embodiment, it will be understood that modifications within the principles outlined above will be evident to those skilled in the art. For example, the size, number and configuration of the cells shown in Fig. 5 is arbitrary. Also, the hysteresis parameter could be implemented in a number of different ways. Thus, the invention is not limited to the preferred embodiment, but is intended to encompass such modifications.

**Claims**

1. A method for preventing toggling in a wireless network having a plurality of cells including a first cell, a second cell adjacent to the first cell, and a third cell, the first cell offering services of at least a first zone, the second cell offering services of both the first zone and a second zone, the services of the first zone being different from the services of the second zone, each of the first and second zones having boundaries defined by at least one cell boundary, comprising the steps of :

preventing, after a mobile unit hands off to the second cell from the first cell, the mobile unit from using services of the second zone unless the mobile unit was using services of the second zone in the first cell, before entering the second cell,
wherein a hysteresis parameter prevents the mobile unit from using services of the second zone in the second cell, and
permitting the mobile unit to use the services of the second zone in the third cell if the mobile unit was not using services of the second zone before entering the third cell and if there is no hysteresis parameter associated with the second zone in the third cell.

2. A method according to claim 1, further comprising the steps of:

operating on the second zone in the first cell; after entering the second cell, determining whether the first zone or the second zone is more preferable to the mobile unit; and switching to the first zone in the second cell if the first zone is more preferable to the mobile unit.

3. A method according to claim 1, further comprising the step of permitting the mobile unit to power up in the second cell using services of the second zone.

4. A method according to claim 1, wherein the hysteresis parameter is transmitted to the mobile unit by the second cell when the mobile unit enters the second cell.

5. A method according to claim 1, wherein the hysteresis parameter is selectively obtained from the memory of the mobile unit based on the identity of the cell the mobile unit is entering and the zones available within the cell the mobile unit is entering.

6. A method according to claim 1, wherein the network has a plurality of zone-cell combinations, a hysteresis parameter being selectively associated with each zone-cell combination.

7. A method according to claim 1, wherein when the mobile travels from an old cell of the first through third cells to a new cell of the first through third cells, the mobile unit:

identifies the zones available in the new cell and determines which of the available zones is most preferable, determines if there is the hysteresis parameter associated with the most preferable zone, uses services of the most preferable zone if there is no hysteresis parameter associated with the most preferable zone, and does not use services of the most preferable zone if there is a hysteresis parameter associated with the most preferable zone and the mobile was not using services of the most preferable zone in the old cell, prior to entering the new cell.

8. A wireless network for preventing a mobile unit from toggling between services of first and second zones, comprising:

a first cell; and a second cell having hysteresis and offering services of first and second zones, each of the first and second zones having boundaries defined by at least one cell boundary, to prevent a said mobile unit travelling from the first cell to the second cell from using services of the second zone, after the said mobile unit hands off to the second cell from the first cell, unless the said mobile unit was using services of the second zone before entering the second cell, wherein a hysteresis parameter is arranged to prevent the mobile unit from using services of the second zone in the second cell, the network having a third cell, the mobile unit being permitted to use the services of the second zone in the third cell if the mobile unit was not using services of the second zone before entering the third cell and if there is no hysteresis parameter associated with the second zone in the third cell.

**Patentansprüche**

1. Verfahren zur Verhinderung des Hin- und Herwechselns in einem drahtlosen Netz mit einer Mehrzahl von Zellen, die eine erste Zelle, eine zweite Zelle benachbart zur ersten Zelle und eine dritte Zelle umfassen, wobei die erste Zelle Dienste mindestens einer ersten Zone anbietet, die zweite Zelle sowohl Dienste der ersten Zone als auch einer zweiten Zone anbietet, die Dienste der ersten Zone von den Diensten der zweiten Zone verschieden sind, und jede der ersten und zweiten Zonen Grenzen aufweist, die durch mindestens eine Zellgrenze definiert sind, umfassend die folgenden Schritte:

Verhindern nach dem Wechseln einer Mobileinheit von der ersten Zelle in die zweite Zelle, dass die Mobileinheit Dienste der zweiten Zone verwendet, sofern die Mobileinheit Dienste der zweiten Zone in der ersten Zelle nicht vor dem Eintreten in die zweite Zelle verwendet hat, wobei ein Hystereseparameter verhindert, dass die Mobileinheit Dienste der zweiten Zone in der zweiten Zelle verwendet, und Zulassen, dass die Mobileinheit die Dienste der zweiten Zone in der dritten Zelle verwendet, wenn die Mobileinheit Dienste der zweiten Zone nicht vor dem Eintreten in die dritte Zelle verwendet hat, und wenn kein Hystereseparameter vorhanden ist, der mit der zweiten Zone in der dritten Zelle assoziiert ist.

**2.** Verfahren nach Anspruch 1, ferner umfassend die folgenden Schritte:

Agieren in der zweiten Zone in der ersten Zelle;
Bestimmen nach dem Eintreten in die zweite Zelle, ob die erste Zone oder die zweite Zone für die Mobileinheit wünschenswerter ist; und Wechseln in die erste Zone in der zweiten Zelle, wenn die erste Zone für die Mobileinheit wünschenswerter ist.

**3.** Verfahren nach Anspruch 1, ferner umfassend den Schritt des Zulassens, dass die Mobileinheit in der zweiten Zelle unter Verwendung von Diensten der zweiten Zone einschaltet.

**4.** Verfahren nach Anspruch 1, wobei der Hystereseparameter durch die zweite Zelle an die Mobileinheit gesendet wird, wenn die Mobileinheit in die zweite Zelle eintritt.

**5.** Verfahren nach Anspruch 1, wobei der Hystereseparameter selektiv aus dem Speicher der Mobileinheit basierend auf der Identität der Zelle, in welche die Mobileinheit eintritt, und der Zonen, die innerhalb der Zelle verfügbar sind, in welche die Mobileinheit eintritt, erhalten wird.

**6.** Verfahren nach Anspruch 1, wobei das Netz eine Mehrzahl von Zonen-Zellen-Kombinationen aufweist, wobei ein Hystereseparameter selektiv mit jeder Zonen-Zellen-Kombination assoziiert ist.

**7.** Verfahren nach Anspruch 1, wobei, wenn sich die Mobileinheit von einer alten Zelle der ersten bis dritten Zellen in eine neue Zelle der ersten bis dritten Zellen bewegt, die Mobileinheit
die Zonen identifiziert, die in der neuen Zelle verfügbar sind, und bestimmt, welche der verfügbaren Zonen am wünschenswertesten ist,
bestimmt, ob der Hystereseparameter vorhanden ist, der mit der wünschenswertesten Zone assoziiert ist,
Dienste der wünschenswertesten Zone verwendet, wenn kein Hystereseparameter vorhanden ist, der mit der wünschenswertesten Zone assoziiert ist, und Dienste der wünschenswertesten Zone nicht verwendet, wenn ein Hystereseparameter vorhanden ist, der mit der wünschenswertesten Zone assoziiert ist, und die Mobileinheit Dienste der wünschenswertesten Zone nicht vor dem Eintreten in die neue Zelle verwendet hat.

**8.** Drahtloses Netz zum Verhindern, dass eine Mobileinheit zwischen Diensten von ersten und zweiten Zonen hin- und herwechselt, umfassend:

eine erste Zelle; und

eine zweite Zelle, die eine Hysterese aufweist und Dienste von ersten und zweiten Zonen anbietet, wobei jede der ersten und zweiten Zonen Grenzen aufweist, die durch mindestens eine Zellgrenze definiert sind, um zu verhindern, dass die Mobileinheit, die sich von der ersten Zelle in die zweite Zelle bewegt, nach dem Wechseln der Mobileinheit von der ersten Zelle in die zweite Zelle Dienste der zweiten Zone verwendet, sofern die Mobileinheit Dienste der zweiten Zone nicht vor dem Eintreten in die zweite Zelle verwendet hat,
wobei ein Hystereseparameter so ausgelegt ist, dass er verhindert, dass die Mobileinheit Dienste der zweiten Zone in der zweiten Zelle verwendet,
das Netz eine dritte Zelle aufweist, und der Mobileinheit erlaubt wird, die Dienste der zweiten Zone in der dritten Zelle zu verwenden, wenn die Mobileinheit Dienste der zweiten Zone nicht vor dem Eintreten in die dritte Zelle verwendet hat und wenn kein Hystereseparameter vorhanden ist, der mit der zweiten Zone in der dritten Zelle assoziiert ist.

### Revendications

**1.** Procédé permettant d'éviter le basculement dans un réseau sans fil présentant une pluralité de cellules incluant une première cellule, une deuxième cellule adjacente à la première cellule, et une troisième cellule, la première cellule offrant les services d'au moins une première zone, la deuxième cellule offrant les services à la fois de la première zone et d'une seconde zone, les services de la première zone étant différents des services de la seconde zone, chacune des première et seconde zones présentant des frontières définies par au moins une frontière de cellule, comprenant les étapes ci-dessous consistant à :

empêcher, après qu'une unité mobile est transférée vers la deuxième cellule à partir de la première cellule, l'unité mobile d'utiliser les services de la seconde zone, à moins que l'unité mobile était en train d'utiliser les services de la seconde zone dans la première cellule, avant de pénétrer dans la deuxième cellule ;
dans lequel un paramètre d'hystérésis empêche l'unité mobile d'utiliser les services de la seconde zone dans la deuxième cellule ; et
permettre à l'unité mobile d'utiliser les services de la seconde zone dans la troisième cellule si l'unité mobile n'était pas en train d'utiliser les services de la seconde zone avant de pénétrer dans la troisième cellule et s il n'y a aucun paramètre d'hystérésis associé à la seconde zone dans la troisième cellule.

**2.** Procédé selon la revendication 1, comprenant en outre les étapes ci-dessous consistant à :

opérer sur la seconde zone dans la première cellule ;
successivement à une entrée dans la deuxième cellule, déterminer si la première zone ou la seconde zone est davantage préférable pour l'unité mobile ; et
commuter sur la première zone dans la deuxième cellule si la première zone est davantage préférable pour l'unité mobile.

**3.** Procédé selon la revendication 1, comprenant en outre l'étape consistant à permettre à l'unité mobile de se mettre sous tension dans la deuxième cellule en utilisant les services de la seconde zone.

**4.** Procédé selon la revendication 1, dans lequel le paramètre d'hystérésis est transmis à l'unité mobile par la deuxième cellule lorsque l'unité mobile pénètre dans la deuxième cellule.

**5.** Procédé selon la revendication 1, dans lequel le paramètre d'hystérésis est obtenu sélectivement à partir de la mémoire de l'unité mobile sur la base de l'identité de la cellule dans laquelle l'unité mobile pénètre et des zones disponibles au sein de la cellule dans laquelle l'unité mobile pénètre.

**6.** Procédé selon la revendication 1, dans lequel le réseau présente une pluralité de combinaisons zones / cellules, un paramètre d'hystérésis étant sélectivement associé à chaque combinaison zone / cellule.

**7.** Procédé selon la revendication 1, dans lequel, lorsque l'unité mobile se déplace d'une ancienne cellule des première à troisième cellules vers une nouvelle cellule des première à troisième cellules, l'unité mobile :

identifie les zones disponibles dans la nouvelle cellule et détermine quelle zone parmi les zones disponibles est davantage préférable ;
détermine si le paramètre d'hystérésis associé à la zone davantage préférable est présent ;
utilise les services de la zone davantage préférable s'il n'y a aucun paramètre d'hystérésis associé à la zone davantage préférable ; et
n'utilise pas les services de la zone davantage préférable s'il existe un paramètre d'hystérésis associé à la zone davantage préférable, et si l'unité mobile n'était pas en train d'utiliser les services de la zone davantage préférable dans l'ancienne cellule, avant de pénétrer dans la nouvelle cellule.

**8.** Réseau sans fil destiné à éviter qu'une unité mobile ne bascule entre les services de première et seconde zones, comprenant :

une première cellule ; et
une deuxième cellule présentant une hystérésis et offrant les services de première et seconde zones, chacune des première et seconde zones présentant des frontières définies par au moins une frontière de cellule, en vue d'empêcher une dite unité mobile se déplaçant de la première cellule à la deuxième cellule d'utiliser les services de la seconde zone, après que ladite unité mobile est transférée vers la deuxième cellule à partir de la première cellule, à moins que ladite unité mobile n'était en train d'utiliser les services de la seconde zone avant de pénétrer dans la deuxième cellule ;
dans lequel un paramètre d'hystérésis est agencé de manière à empêcher l'unité mobile d'utiliser les services de la seconde zone dans la deuxième cellule ;
le réseau présentant une troisième cellule, l'unité mobile étant autorisée à utiliser les services de la seconde zone dans la troisième cellule si l'unité mobile n'était pas en train d'utiliser les services de la seconde zone avant de pénétrer dans la troisième cellule et s'il n'y a aucun paramètre d'hystérésis associé à la seconde zone dans la troisième cellule.

# FIG. 1

EP 1 492 361 B1

FIG. 2

EP 1 492 361 B1

# FIG. 3

EP 1 492 361 B1

FIG. 4

**EP 1 492 361 B1**

**REFERENCES CITED IN THE DESCRIPTION**

**Patent documents cited in the description**

- US 5802468 A
- WO 9528063 A
- WO 9733448 A
- WO 9416529 A